# EUROPEAN PATENT APPLICATION

(11) **EP 2 107 858 A2**
(43) Date of publication of application: **07.10.2009**
(21) Application number: 09156610.9
(22) Date of filing: 30.03.2009
(51) Int. Cl.: H05B 33/08

(54) **Power supply apparatus for lighting device**

(30) Priority: 31.03.2008 JP 2008090809; 24.02.2009 JP 2009041074
(71) Applicant: Yamagata Promotional Organization for Industrial Technology, Yamagata-shi Yamagata 990-2473 (JP)
(72) Inventor: Oda, Atsushi, Yamagata 990-2473 (JP); Shimada, Shinichi, Yamagata 990-2473 (JP)
(74) Representative: HOFFMANN EITLE

(57) **Abstract**

The apparatus is provided with a plurality of lighting devices 8 whose light sources are one or more solid light emitting elements which are supplied with current from a single direct-current power source, lit, and driven respectively, a single main controller 2 which generates a control signal for controlling dimming with regard to the above-mentioned plurality of lighting devices 8, and a subcontroller 7, assuming the above-mentioned lighting devices 8 to be a unit, being provided corresponding to a lighting device for each unit as mentioned above, and controlling dimming of the lighting device for each unit as mentioned above based on the control signal sent from the above-mentioned main controller 2, respectively.

## Description

### BACKGROUND OF THE INVENTION

### Field of the Invention

The present invention relates to a power supply apparatus for a lighting device which can be suitably employed in the case where a solid light-emitting element which is lit and driven by a direct-current power source, such as for example an organic EL (Electro Luminescence) element, LED (Light Emitting Diode), etc., is used as a light source for illumination.

### Background of the Related Art

Conventionally, a lighting apparatus used indoors (in a room) is generally arranged such that one or more light sources for illumination represented by a fluorescent lamp are installed in each room and commercial electric power is supplied through a switch to each room. As is well known, the above-mentioned lighting apparatus using the fluorescent lamp spreads widely nowadays, and various forms of a fluorescence lamp have also been developed from a striplight to a circular lamp etc., and its color rendering properties have also been improved, thus supporting its long history.

On the other hand, by using a low-voltage direct-current power source as a drive source, there have been developments of the organic EL element which allows high luminosity and highly efficient luminescence characteristics. Since this organic EL element can be made light-weight and thin, it is used for a flat panel display (FPD) in some portable devices etc.

Further, the organic EL element can provide various luminescence colors by selecting a material used for a light-emitting functional layer. Thus, it is possible to obtain arbitrary luminescence colors by independently using each luminescence color, or combining two or more luminescence colors. Therefore, by arranging the organic EL element as a plane light emitter (luminescence panel) which has a comparatively large area, it can be used as an efficient light source which illuminates the interior of a room, a car, etc. in addition to a luminescence poster for an advertisement, a light source for electric illumination.

On the other hand, the above-mentioned LED is driven by the low-voltage direct-current power source to provide luminous efficiency, thus obtaining various types of luminescence colors by selection of a material to be used. In addition, since LED can provide a long life and a stable luminescence characteristic, it is used in a wide range of fields, such as for example, a traffic light, large-sized displays used outdoors, an electro-optic transducer means in a telecommunications field, and it is also expected to be applied to the lighting apparatus indoors and outdoors etc.

In addition, many patent applications have been filed for using the above-mentioned organic EL element and LED as a light source for illumination. As an example of one such use of the former organic EL element, there may be mentioned Japanese Patent Application Publication No. 2007-227094. An example of one such use of the latter LED, there may be mentioned Japanese Patent Application Publication No. 2007-005003.

Incidentally, as for solid light-emitting elements, such as the above-mentioned organic EL element, LED, etc., the low-voltage direct-current power source is used as the drive source, as described above. Thus, in the case where these are used for interior illumination etc., the direct-current power source (AC/DC convertor) which generates low-voltage direct current from commercial electric power is needed for every lighting apparatus. For example, according to the arrangement in which the above-mentioned direct-current power source is thus provided for every lighting device installed in each room, there is a problem that it is inefficient and costly.

Further, a plurality of solid light-emitting elements, such as the above-mentioned organic EL element, LED, etc., may be prepared to be combined and formed into one lighting device. Even in such a lighting device, since the low-voltage direct-current power source is used for each of the plurality of solid light-emitting elements which constitute the lighting device, there is a similar problem as described above.

### SUMMARY OF THE INVENTION

The present invention arises in view of the above-mentioned problems, and aims to providing a power supply apparatus for a lighting device which can supply drive power efficiently at low cost and allows lighting control in various ways in the case of using solid light-emitting elements, such as an organic EL element, LED, etc., as a light source of the lighting apparatus in an indoor environment (in a room), such as in a residence or an office, and in the case of combining a plurality of the above-mentioned solid light-emitting elements into one lighting device.

The power supply apparatus of for lighting device in accordance with the present invention made in order to solve the above-mentioned problems, is characterized by being provided with a plurality of lighting devices whose light sources are one or more solid light-emitting elements which are supplied with current from a single direct-current power source, lit, and driven respectively, or one lighting device whose light sources are a plurality of solid light-emitting elements which are supplied with current from a single direct-current power source, lit, and driven respectively; a single main controller for generating a control signal for controlling dimming with regard to the plurality of solid light-emitting elements in the above-mentioned plurality of lighting devices or one lighting device; and a sub-controller, assuming the above-mentioned one or more solid light-emitting elements in one or more lighting devices or one lighting device to be a unit, being provided corresponding to a lighting device for each the above-mentioned unit or the solid light-emitting elements for each the above-mentioned unit, and controlling dimming of the lighting device for each the above-mentioned unit or the solid light-emitting elements for each the above-mentioned unit based on the control signal sent from the above-mentioned main controller.

In this case, the above-mentioned sub-controller is desirably arranged such that it is individually subjected to dimming operation and the dimming control of the above-mentioned lighting device or the above-mentioned solid light-emitting element disposed corresponding to the above-mentioned sub-controller is carried out in preference to the dimming control based on the control signal from the above-mentioned main controller.

Further, in the preferred embodiments, it is arranged that a power supply line which transmits direct current supplied from the above-mentioned direct-current power source and a signal line which transmits the control signal from the above-mentioned main controller are connected together through one outlet for every sub-controller provided corresponding to the lighting device for each unit as mentioned above. In addition to this, it is preferably arranged that at least one of the above mentioned outlets is provided for each room of a building.

On the other hand, desirably the above-mentioned main controller is arranged such that operation of transmitting the above-mentioned control signal for controlling dimming to each sub-controller as mentioned above may be performed according to a magnitude of outside light. In addition, preferably the organic EL element or LED is used as a light source for each lighting device as mentioned above.

According to the thus arranged power supply apparatus of the lighting device as described above, since the plurality of lighting devices whose light sources are the solid light-emitting elements are arranged to be supplied with direct current from the single direct-current power source, lit, and driven respectively, it is possible to solve the problem that it is inefficient and costly as compared with the structure in which the direct-current power source is provide for every lighting device.

Similarly, even in the case where the plurality of solid light-emitting elements are combined into one lighting device, since they are arranged to be supplied with direct current from the single direct-current power source, lit and driven respectively, it is similarly possible to solve the problem that it is inefficient and costly.

Further, since one or more lighting devices are assumed to be a unit and it is arranged that the sub-controller is provided which performs the dimming control based on the control signal sent from the main controller, it is possible to generally control dimming of the whole lighting device. Therefore, corresponding to the outside light, it is possible to perform the dimming for each of the lighting devices en masse. For example, suitable dimming can be realized according to day or night.

Furthermore, it is arranged that the above-mentioned sub-controller is individually subjected to the dimming operation and the dimming control of the above-mentioned lighting device disposed corresponding to the above-mentioned sub-controller is carried out in preference to the dimming control based on the control signal from the above-mentioned main controller, whereby the dimming control in each lighting device can be carried out individually as needed.

### BRIEF DESCRIPTION OF THE DRAWINGS

FIG. 1 is a block diagram showing a first preferred embodiment of a power supply apparatus in accordance with the present invention.
FIG. 2 is a format chart showing an example of a control signal sent from a main controller to a sub-controller as shown in FIG. 1.
FIG. 3 is a timing chart showing an example of dimming control by PWM carried out by the sub-controller as shown in FIG. 1.
FIG. 4 is a graph showing an example of a setup of a correction table suitably used in the dimming control by PWM.
FIG. 5(A) is a front view showing a structure of a lighting device suitably used in a second preferred embodiment of the power supply apparatus in accordance with the present invention, and FIG. 5(B) is a front view in a situation where a panel case and the front of a hub case are removed.
FIG. 6 is a perspective view showing the panel case only.
FIG. 7 is a schematic view for explaining a basic structure of an organic EL element as a light emitting element used for the lighting device.
FIG. 8 is a circuit block diagram for explaining an example of a dimming control device in the second preferred embodiment.
FIG. 9 is a circuit block diagram showing an example of a structure of a power supply module accommodated in the hub case.
FIG. 10 is a side view showing a situation where the lighting device is installed in stairs.
FIG. 11 is a front view showing a situation where it is similarly installed in stairs.
FIG. 12 is a perspective view showing a structure of the lighting device suitably used in a third preferred embodiment of the power supply apparatus in accordance with the present invention.
FIG. 13 is a perspective view from below of the lighting device with some angle.
FIG. 14 is a perspective view similarly showing a situation where one sub-panel is raised up.
FIG. 15 is a perspective view showing another example of the structure of the lighting device so that a sub-panel is supported so as to be pivoted with respect to a main panel.
FIG. 16 is a perspective view showing a structure of the lighting device suitably used in a fourth preferred embodiment of the power supply apparatus in accordance with the present invention.
FIG. 17 is a bottom plan view, similarly.
FIG. 18 is a front view showing an example in which respective ones of planar frames are combined into a unit.
FIG. 19 is a schematic view for explaining an example in which plane light emitters for the respective frames which are combined into a unit are mounted.

### DESCRIPTION OF THE PREFERRED EMBODIMENTS

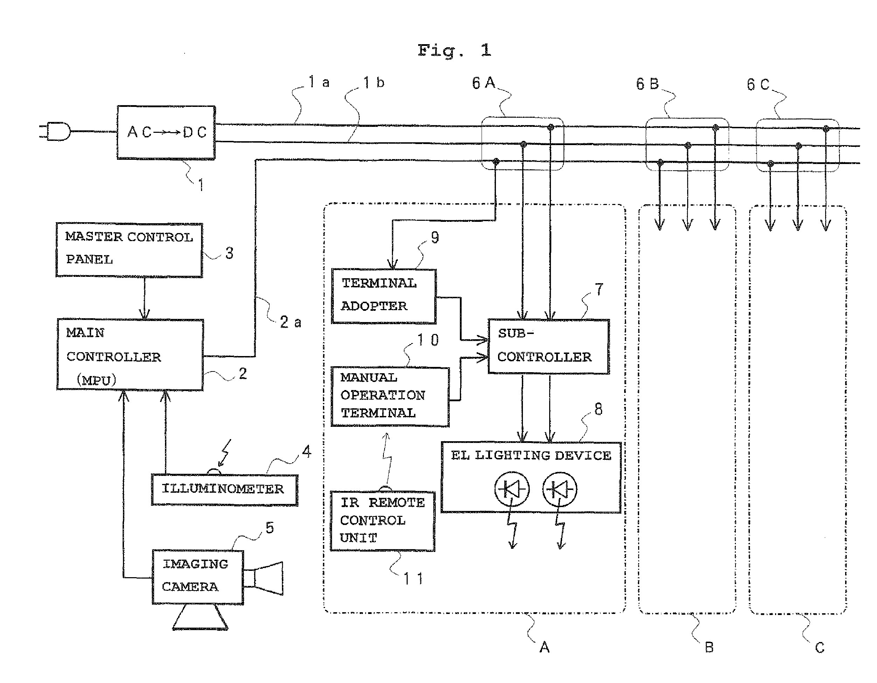

Hereafter, a power supply apparatus for a lighting device in accordance with the present invention will be described with reference to the preferred embodiments as illustrated in the drawings. First, FIGS. 1 - 4 show a first preferred embodiment of the power supply apparatus in accordance with the present invention. FIG. 1 shows the whole structure of the first preferred embodiment by a block diagram, and illustrates an arrangement where, taking one house as an example, the lighting devices arranged in respective rooms shown by dashed lines are supplied with electric power from one direct-current power source.

As shown in FIG. 1, this power supply apparatus is provided with a single direct-current power source 1 which is supplied with electric power from an AC power source (AC commercial power supply), and converts it into direct-current power. This direct-current power source 1 is connected with a pair of power supply lines 1a and 1b which supply direct-current power output, and these power supply lines 1a and 1b are laid via each of the rooms A, B, and C as shown by the dashed lines.

Further, this power supply apparatus is provided with a single main controller 2 which generates a control signal for performing dimming control etc. for the lighting device of each room to be set forth later. It is arranged that operation instructions from a master control panel 3 can be inputted into the above-mentioned main controller 2, as well as it is arranged that measurement data of an illuminometer 4 which detects outside light, for example, and image data from an imaging camera 5 may also be inputted, if necessary.

A signal line 2a is extended from the above-mentioned main controller 2. This signal line 2a is laid together with a pair of the above-mentioned power supply lines 1a and 1b, via each of the rooms A, B, and C as shown by dashed lines. In addition, the above-mentioned main controller 2 may be disposed in the place adjacent to the above-mentioned direct-current power source 1, or may be constituted integrally with it.

On the other hand, the power supply lines 1a and 1b and signal line 2a which are laid via each of the rooms A, B, and C are extended into each room through the outlets 6A, 6B, and 6C disposed so as to face proper positions in the respective rooms A, B, and C. In addition, although the block diagram shows the example of the power supply apparatus provided for the room A in FIG. 1, the other rooms B and C are arranged substantially similarly, and the description thereof is omitted.

As the above-mentioned room A is shown by way of example, direct-current power via the power supply lines 1a and 1b is supplied to a sub-controller 7 through the outlet 6A, and it is arranged so that dimming control may be carried out in the sub-controller 7 and electric power may be supplied to a lighting device 8. As the lighting device 8 using the solid light-emitting element, one that uses an organic EL element is adopted, for example. This organic EL element may be of a single panel or one that has a structure in which a plurality of panels are connected in series or in parallel according to its application.

Further, the control signal from the main controller 2 through the above-mentioned signal line 2a is also arranged to be supplied to the above-mentioned sub-controller 7 through the outlet 6A and a terminal adopter 9. In other words, the above-mentioned terminal adopter 9 is supplied with the control signal from the above-mentioned main controller 2 and controls the sub-controller 7, to thereby perform dimming operation of the lighting device 8 etc. Its operation will be described later.

Furthermore, it is arranged that the above-mentioned sub-controller 7 may be supplied with the control signal from a manual operation terminal 10. Based on the input operation in this manual operation terminal 10, instructions to control dimming etc. may be inputted to the sub-controller 7 for each room or for each lighting device 8. In addition, it is also arranged that the above-mentioned manual operation terminal 10 is supplied with an operation signal from a remote control unit 11, so that the sub-controller 7 may be subjected to the similar instruction control.

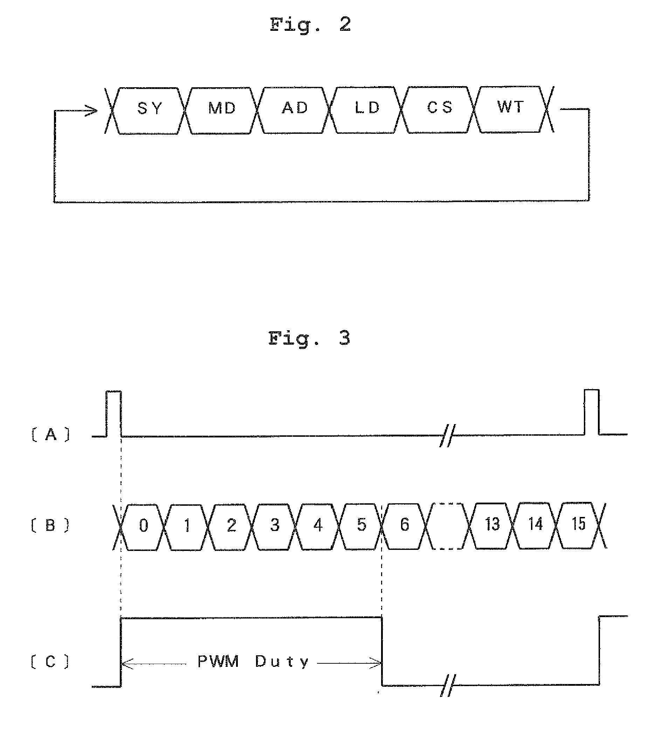

FIG. 2 shows an example of a format of the control signal sent from the above-mentioned main controller 2 through the signal line 2a and the terminal adopter 9 to the sub-controller 7. In this example, in synchronization with the control signal sent from the main controller 2, the control signal (data) is communicated between the main controller 2 and the sub-controller 7 for each room by the Time Division Multiple Access system. In other words, an address is individually assigned to the sub-controller 7 of each room, and the main controller 2 operates so that the sub-controller 7 may be identified using the above-mentioned address.

Reference sign SY shown in FIG. 2 indicates a synchronization signal which shows the transmission start of the signal. Reference sign MY denotes a mode data showing a form of the control signal to be transmitted. Reference sign AD shows an address data for individually calling the above-mentioned terminal adopter 9 and the sub-controller 7 connected thereto. Reference sign LD indicates a dimming data for issuing instructions of dimming to the sub-controller 7 corresponding to the above-mentioned address. Reference sign CS denotes a checksum data for detecting a transmission error. Reference sign WT shows a time slot for setting up a return period during which a surveillance data of the sub-controller 7 and the terminal adopter 9 connected thereto is returned, if necessary.

As described above, a series of data arranged chronologically in series are repeatedly sent from the main controller 2 toward each sub-controller 7, changing address data one by one. The sub-controller 7 having a matched address receives the above-mentioned dimming data LD from the main controller 2 etc. Based on this, the dimming control in the lighting device 8 etc. is individually performed.

Therefore, in the structure as shown in FIG. 1, a degree of the dimming control in the lighting device 8 for each room can be individually inputted into the main controller 2 by means of the master control panel 3. The dimming control of the lighting device 8 for each room can be individually carried out according to a signal format shown in FIG. 2 and sent from the main controller 2 based on the input instructions.

Further, as described above, since it is arranged that the main controller 2 is supplied with a measurement data from the illuminometer 4 which detects outside light, it is possible to appropriately control the dimming data according to day or night, and to perform the dimming control etc. individually, including putting out the lighting device.

On the other hand, the manual operation terminal 10 which includes the remote control unit 11 disposed corresponding to the lighting device 8 of each room can individually carry out the dimming control of the lighting device 8 corresponding to the terminal. In the dimming control in this case, the signal format as shown in FIG. 2 can also be used. Further, it is arranged that the dimming control by the manual operation terminal 10 is carried out in preference to the dimming control based on the control signal from the above-mentioned main controller 2. When in room, therefore, it is possible to realize the dimming control by means of the manual operation terminal 10 irrespective of the control signal from the main controller 2.

FIG. 3 shows a basic example of the dimming control carried out by the above-mentioned sub-controller 7. This example as shown in FIG. 3 illustrates an example in which the dimming control is realized by PWM. FIG. 3(A) shows a synchronization signal which determines a duty cycle of PWM, and this may be generated based on the synchronization signal SY as explained with reference to FIG. 2, for example. A period of one cycle as shown in FIG. 3(A) is divided into 16 steps (for example) as shown in FIG. 3(B), and controlled to set up a lighting period with the number of steps based on dimming control data.

In other words, FIG. 3(C) shows a situation where a direct-current drive voltage is applied to the above-mentioned organic EL element which constitutes the light emitting element of the lighting device in the period of six steps "0"- "5" of 16 steps. Therefore, it follows that the greater the above-mentioned number of steps for setting up the lighting period is, the more brightly (with higher luminosity) the lighting device emits light.

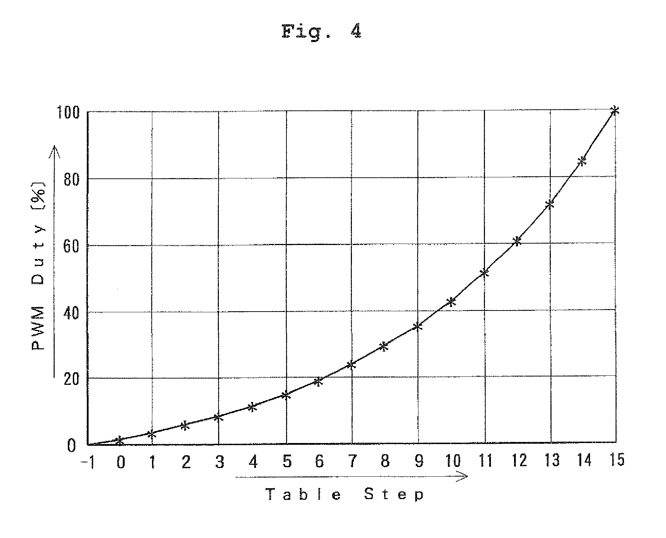

In addition, as for human visibility, greater recognition capability in luminosity change appears in a range of low luminosity, so that a duty ratio of PWM changes a little in the range of the small number of steps as shown, for example, in FIG. 4. It is therefore desirable that (the sub-controller 7) is caused to operate so that the duty ratio of PWM may be determined by means of a correction table in which the greater the number of steps is, the larger the change in the duty ratio of PWM is, and based on the above-mentioned compensated number of steps.

In addition, in the preferred embodiment as described above, although the structure is shown in which the sub-controller 7 is provided for one lighting device 8, one or more lighting devices may be assumed to be a unit, and it may be arranged that a sub-controller is provided for each of the above-mentioned units. Further, although the example using the organic EL element as the solid light-emitting element which constitutes the above-mentioned lighting device 8 is shown, it is possible to obtain the operational effect as described in the above-described column of effect of invention even if other elements are used which are caused and driven to emit light by LED or the direct-current power source.

Furthermore, in the above-mentioned preferred embodiment, it is arranged that the control signal from the controller 2 for performing the dimming control etc. may be supplied to the sub-controller 7 through the signal line 2a; however, a wireless transmission means can be used not via the above-mentioned signal line 2a. In this case, it follows that the wireless transmission means is provided for the controller 2 side and a wireless reception means is provided for the sub-controller 7 side.

Still further, in the above-mentioned preferred embodiment, although the single direct-current power source is used which is supplied with electric power from the AC power source (AC commercial power supply) and carries out the output conversion to provide direct current , it is possible to use the single direct-current power source which is supplied with electric power from the direct-current power source and carries out voltage conversion into direct current which can drive the above-mentioned organic EL element etc.

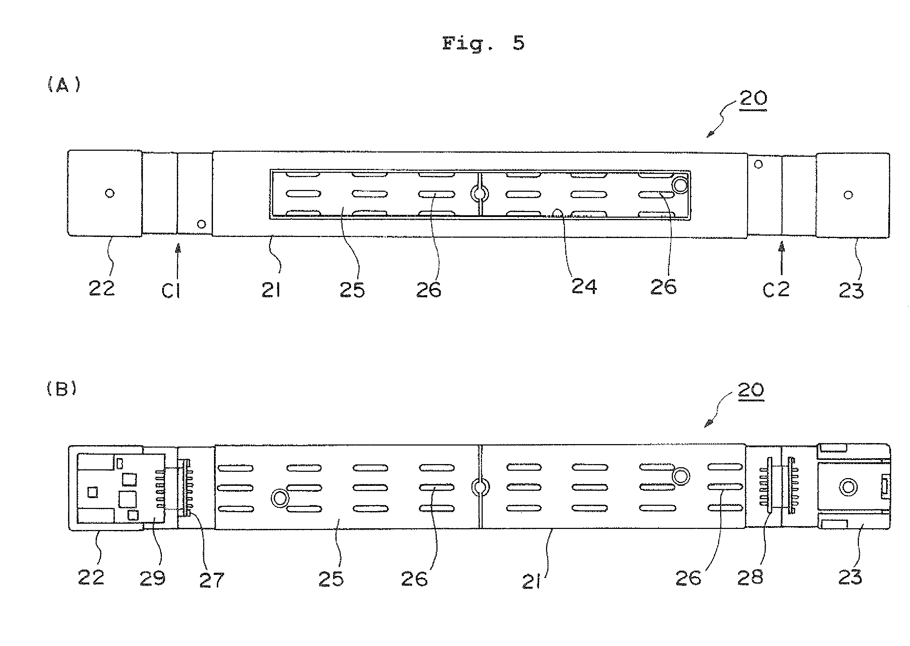

Next, FIGS. 5 - 11 show a second preferred embodiment of the power supply apparatus in accordance with the present invention, and illustrate an example in which there are provided a single main controller for generating a control signal which controls dimming for a plurality of lighting devices, and a sub-controller which is provided corresponding to the lighting device for each unit as mentioned above, assuming a plurality of lighting devices to be a unit, and controls dimming of the lighting device for each of the above-mentioned units based on the control signal sent from the above-mentioned main controller.

A lighting device 20 as shown in FIG. 5(A) is illustrated in a situation where a hub case 22 is detachably attached to one end of an elongated panel case 21 and a terminus case 23 is detachably attached to the other end of the panel case 21. In addition, it is arranged that the above-mentioned panel case 21 and the hub case 22 can be detached and attached in the portion shown by an arrow C1 in FIG. 5(A), and it is arranged that the above-mentioned panel case 21 and the terminus case 23 can be detached and attached in the portion shown by an arrow C2.

A rectangular window hole 24 is formed in the front of the above-mentioned panel case 21, and it is arranged that luminescence from the organic EL element 25 as a solid light-emitting element disposed in the case 21 may be emitted as illumination light through the window hole 24. In addition, reference numeral 26 denotes a number of slit-like air holes formed at the organic EL element 25, in order to radiate heat generated in the organic EL element 25.

FIG. 5(B) illustrates a situation where the panel is removed from the front side of the above-mentioned panel case 21, the hub case 22, and the terminus case 23. The organic EL element 25 formed in the shape of a strip to occupy substantially the whole surface is disposed in the above-mentioned panel case 21. A connector 27 for detachably connecting the above-mentioned hub case 22 is disposed at one end of the panel case 21, and a connector 28 for detachably connecting the above-mentioned terminus case 23 is disposed at the other end of the panel case 21. A circuit board having mounted therein circuit elements etc. which constitute a power supply module 29 (to be set forth later) is disposed in the above-mentioned hub case 22.

In the situation as shown in FIG. 5, although the terminus case 23 is detachably attached to the above-mentioned other end of the panel case 21, a plurality of panel cases 21 of the same structure may be connected to the panel case 21 in series one by one by means of the above-mentioned connectors 27 and 28 as will be described later. The above-mentioned terminus case 23 is connected with the end of the last panel case 21 connected in series, so as to function to return a transmission signal (to be set forth later) which passes through each panel case 21, thus being defined as a terminus electrically and mechanically.

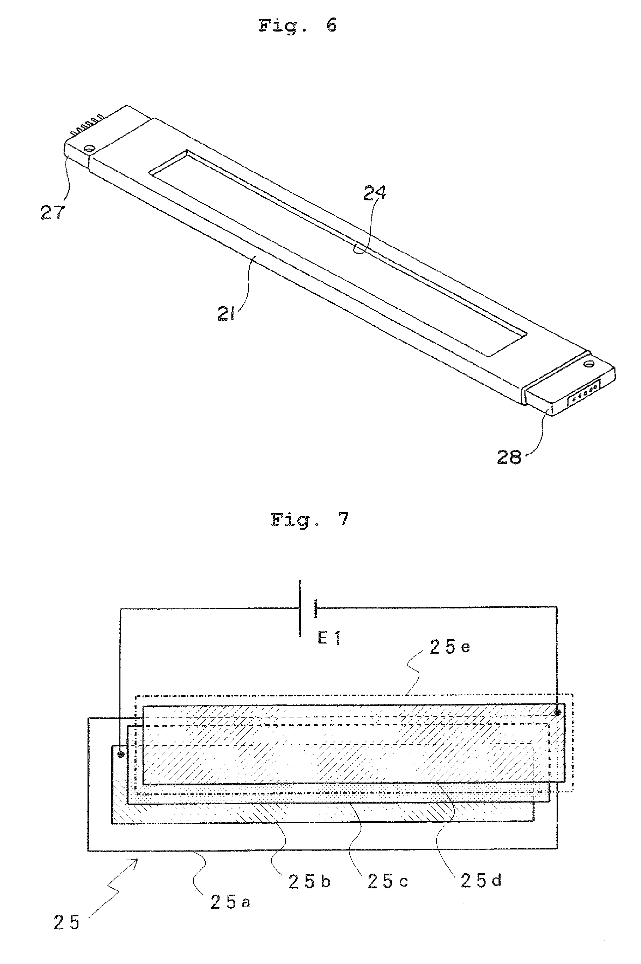

FIG. 6 illustrates an appearance structure of only the above-mentioned panel case 21 by a perspective view. The above-mentioned connector 27 formed at one end of the panel case 21 constitutes a male connector, and the above-mentioned connector 28 formed at the other end of the panel case 21 constitutes a female connector.

The male connector 27 is thus provided at one end of the panel case 1 and the female connector 28 is thus provided at the other end, so that the plurality of panel cases 21 can be connected in series one by one as described above, and at the same time it is possible to achieve electrical connection with the power supply module 29 within the hub case 22. In addition, although not shown, a power supply line for supplying drive power in turn to an organic EL apparatus within the panel case connected to the latter stage and a signal line for transmitting the transmission signal from the power supply module 29 are accommodated in the above-mentioned panel case 21.

FIG. 7 shows an example of a fundamental structure of the organic EL element 25 as the above-mentioned solid light-emitting element, and a situation where respective layers which constitute the organic EL element are separated in a layer direction is illustrated in the figure. In other words, as for this type of organic EL element, a transparent electrode 25b to be a first electrode and made of, for example, ITO is first formed on one side of an element formation substrate 25a made of a transparent material.

Further, a light-emitting functional layer 25c made of an organic substance is formed as a film so as to overlap the above-mentioned transparent electrode 25b. This light-emitting functional layer 25c may be made to have a single layer of an organic light-emitting layer, a two-layer structure constituted by an organic hole-transport layer and an organic light-emitting layer, a three-layer structure constituted by an organic hole-transport layer, an organic light-emitting layer, and an organic electron-transport layer, or a multilayer structure in which an electron or hole injection layer is inserted between suitable layers among them. It should be noted that, in FIG. 7, these are shown by reference numeral 25c, having one layer.

Furthermore, on the above-mentioned light-emitting functional layer 25c, a metal back plate 25d mainly made of a material, such as aluminum etc. is formed as a second electrode. Still further, it is arranged that a sealing member 25e is provided on the above-mentioned back plate 25d, and the organic EL element 25 constituted by the above-mentioned transparent electrode 25b, the light-emitting functional layer 25c, and the back plate 25d is sealed by and between the sealing member 25e and the above-mentioned substrate 25a.

Then, direct current E1 is applied across the above-mentioned transparent electrode 25b and the back plate 25d, whereby the light generated in the light-emitting functional layer 25c can pass through the above-mentioned transparent electrode 25b and the transparent substrate 25a, and can be used for illumination light. In addition, when using luminescence of the organic EL element for illumination, generally the luminescence color is preferably white (daylight color), but the organic EL element can provide various luminescence colors by selecting a material for the above-mentioned light-emitting functional layer 25c.

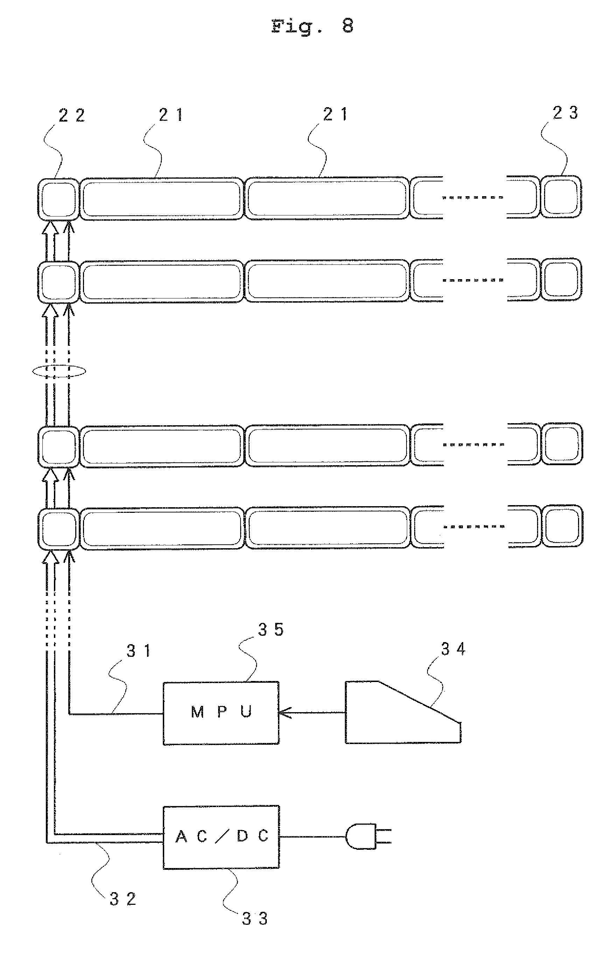

Next, FIG. 8 shows an example in which the power supply apparatus for the lighting device is arranged using the above-mentioned panel case 21, the hub case 22, and the terminus case 23. The example as shown in FIG. 8 illustrates a structure in which the hub case 22 is used as the head and the plurality of panel cases 21 are connected in series one by one by means of the above-mentioned connectors 27 and 28 respectively provided at both ends of the panel case 21, and finally the terminus case 23 is connected. The above-mentioned structure is assumed to be a group, and the example is shown in which a plurality of the groups are provided.

The above-mentioned power supply module 29 accommodated in each of the above-mentioned hub cases 22 is cascade-connected with a signal line 31, and similarly connected with a power supply line 32. The power supply line 32 is arranged such that drive power from the direct-current power source 33 may be supplied to the power supply module 29 accommodated in each hub case 22 through the power supply line 32.

In addition, although it is arranged that the above-mentioned direct-current power source 33 is supplied with electric power from, for example, the AC power source (AC commercial power supply) and carries out the output conversion to provide direct current, it may be a direct-current power source which is supplied with electric power from the direct-current power source and carries out the output conversion to provide direct current which can drive the above-mentioned organic EL element etc.

Further, the above-mentioned signal line 31 allows a dimming control signal generated by a main controller 35 which is constituted by a microprocessor and has received instructions from a master control panel 34 to be supplied to the above-mentioned power supply module 29 accommodated in each hub case 22.

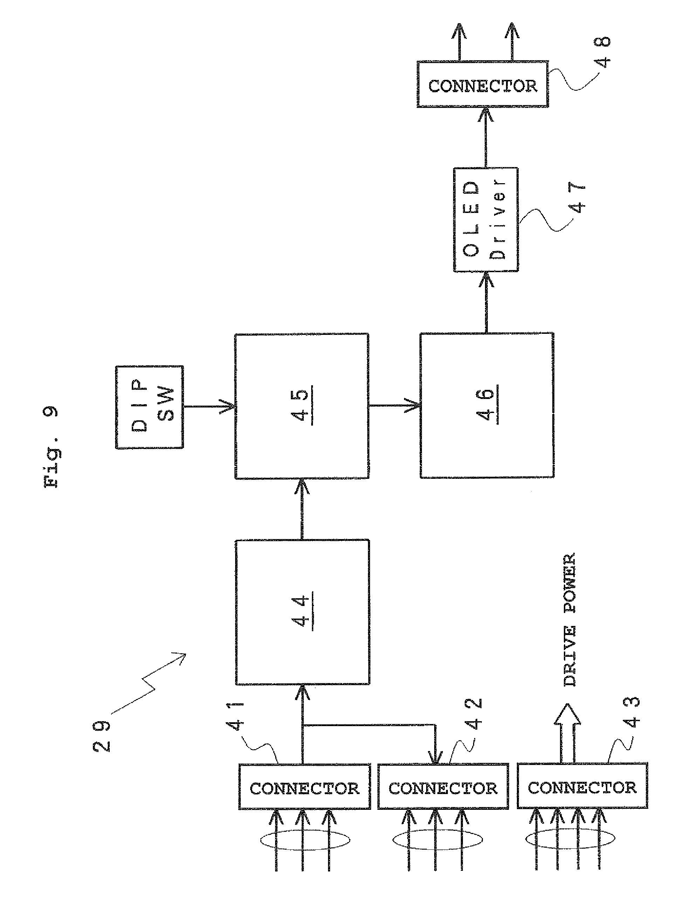

FIG. 9 shows, by a block diagram, an example of a structure of the power supply module 29 accommodated in the hub case 22. This power supply module 29 is provided with connectors 41 and 42 for carrying out the cascade connection of the above-mentioned signal line 31, and provided with a connector 43 which is supplied with output from the direct-current power source 33 through the above-mentioned power supply line 32.

A block as shown by reference numeral 44 is a communication interface module connected to the connectors 41 and 42, and a system-control module 45 is connected through this interface module 44. This system-control module 45 is provided with, for example, an 8-bit DSP-SW for independently performing the dimming control for each panel case 21 (organic EL element 25) which is connected to the above-mentioned hub case 22 where the power supply module 29 is accommodated.

The dimming control module 46 is connected to the above-mentioned system-control module 45. This dimming control module 46 is arranged such that, based on the above-mentioned dimming control data from the system-control module 45, the dimming (luminescence) control signal may be supplied to a dimming control driver 47 with respect to the panel case 21 (organic EL element 25). The drive power-source output from the dimming control driver 47 is supplied through a connector 48 to the respective panel cases 21 which are connected in series using the hub case 22 as the head, so that the organic EL element 25 within each panel case 21 may be lit and driven.

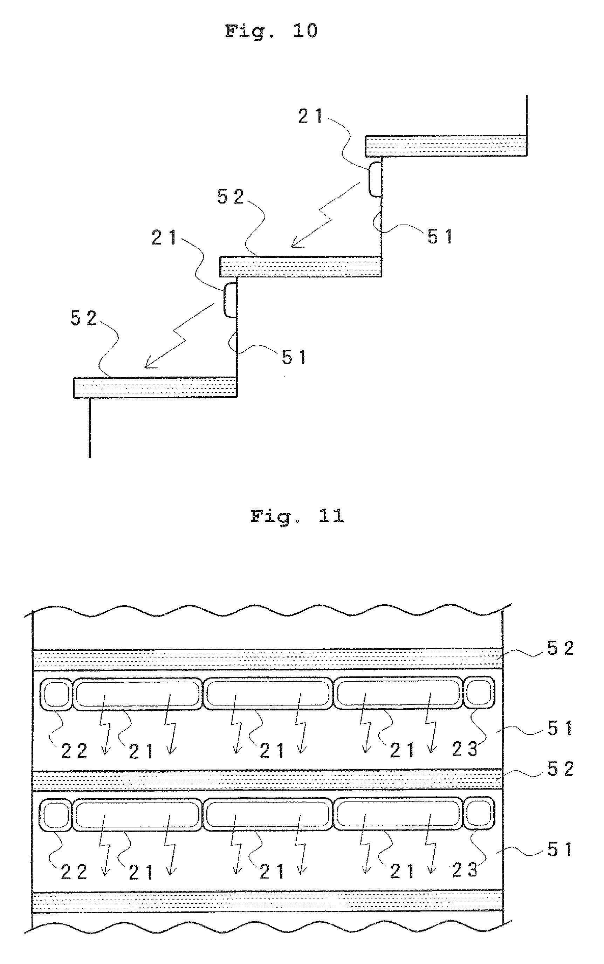

FIGS. 10 and 11 show an example in which the lighting device as shown in FIG. 9 and its power supply apparatus are used for illuminating stairs. FIG. 10 illustrates the stairs viewed from the side and FIG. 11 illustrates the stairs viewed from the front. In this example, a group (shown only by the same reference numeral 21 for the panel case in FIG. 10) in which the hub case 22 having accommodated therein the above-mentioned power supply module 29 is used as the head and the plurality of panel cases 21 are connected in series one by one and the terminus case 23 is finally connected is separately attached to a riser 51 disposed at the stairs vertically. Thus, the lighting device of the stairs which can illuminate a tread of each tread plate 52 is realized.

In the lighting device of the above-mentioned stairs, it is usually possible to carry out the control to have suitable luminosity by the master control panel 34 as shown in FIG. 8. When providing a gorgeous atmosphere, for example like an event hall, it is also possible to employ various uses, such as blinking each step, controlling the dimming for each of the plurality of panel cases 21 connected in series, etc.

This is carried out in such a way that the dimming control signal generated by the main controller 35 which is constituted by a microprocessor having received the instructions from the master control panel 34 as shown in FIG. 8 is supplied to the power supply module 29 within each of the above-mentioned hub cases 22 through the signal line 31. Based on the dimming control signal received from the main controller 35, the power supply module 29 carries out the luminescence control of the organic EL element 25 within each panel case 21 connected to this power supply module 29, thus allowing the above-mentioned operation.

As described above, in the preferred embodiment as illustrated in FIGS. 5 - 11, the above-mentioned hub case 22 is equivalent to the outlets 6A-6C as shown in FIG. 1 and the power supply module 29 accommodated in the hub case 22 provides the same function as that of the terminal adopter 9 and the sub-controller 7 as shown in FIG. 1.

In addition, in the preferred embodiment as described above, the example is shown in which the organic EL element is used as a plane light emitter accommodated in the panel case. However, in addition to this, it is also possible to use solid light-emitting elements, such as LED as described above.

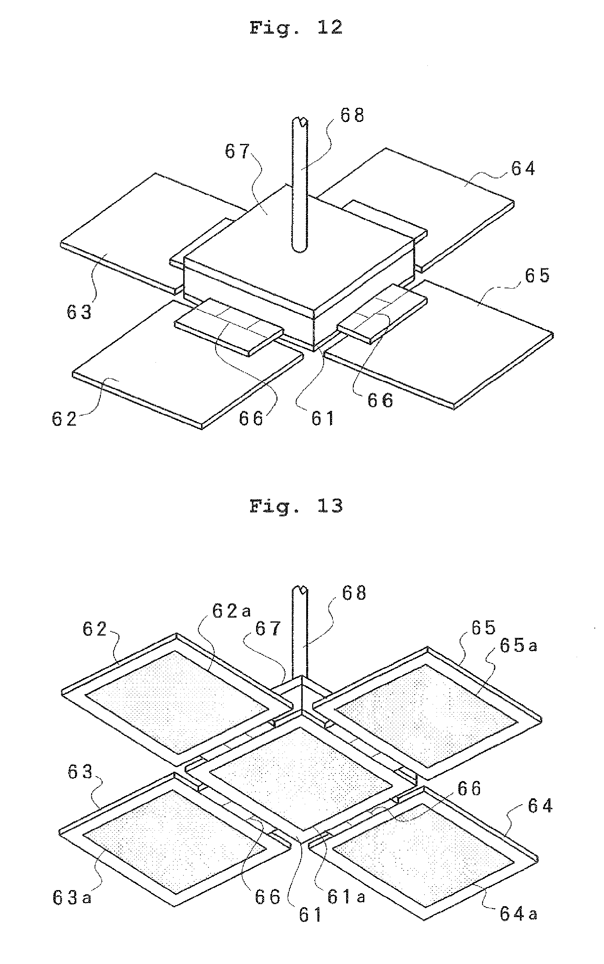

FIGS. 12 - 15 show a third preferred embodiment of the power supply apparatus in accordance with the present invention, and illustrate an example in which the plurality of organic EL elements are used as the solid light-emitting elements, and one lighting device is constituted by the plurality of organic EL elements to perform the dimming control of each organic EL element.

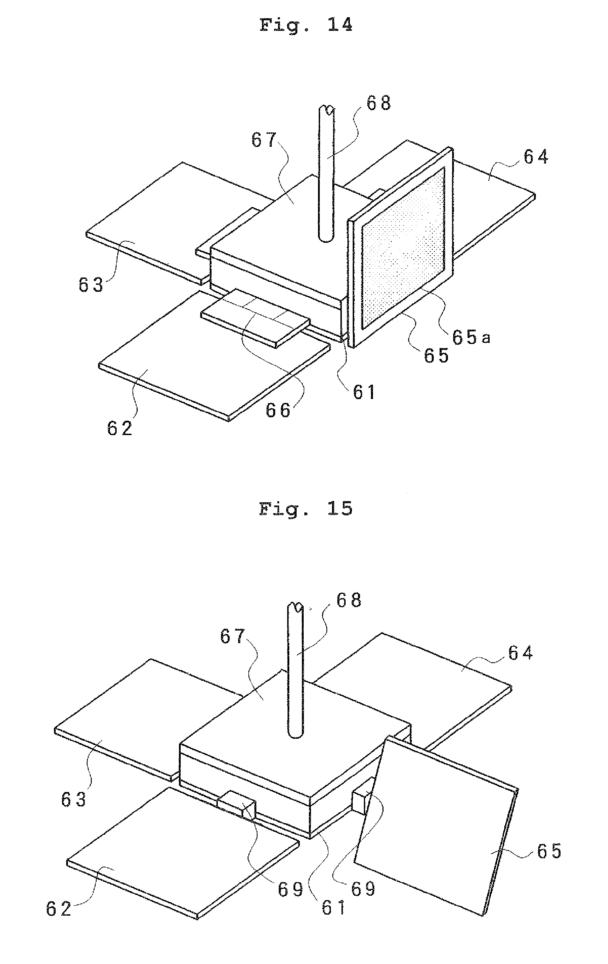

FIG. 12 is a perspective view, from above with some angle, of the lighting device in a situation where each sub-panel is horizontally developed with respect to the main panel using the organic EL element as the light emitting element. Similarly, FIG. 13 is a perspective view from below of the lighting device with some angle. Further, FIG. 14 illustrates a situation where one sub-panel is raised up, and FIG. 15 illustrates an example in which a sub-panel is supported so as to be pivoted with respect to the main panel.

As shown in FIGS. 12 and 13, this lighting device is provided with a main rectangular panel 61 in the center, and a rectangular planar light-emitting unit 61a is attached to an undersurface of the main panel 61 in the shape of a frame with respect to the main panel 61.

Further, the rectangular sub-panels 62, 63, 64, and 65 are swivelingly attached to four sides of the above-mentioned main panel 61 through connection parts 66, respectively. In this preferred embodiment, as shown in FIG. 13, rectangular planar light-emitting units 62a, 63a, 64a, and 65a are respectively attached to undersurfaces of the above-mentioned sub-panels 62-65 in the shape of a frame.

The above-mentioned main panel 61 and the sub-panels 62-65 are each formed in the shape of a square, and they are each arranged to have substantially the same size. Further, it is arranged that each of the planar light-emitting units 61a-65a provided for the main panel 61 and the sub-panels 62-65 is formed in the shape of a square, and has substantially the same size. In addition, in this preferred embodiment, each of the above-mentioned planar light-emitting units is constituted by the organic EL element as described above.

The connection parts 66 which swivelingly support the sub-panels 62-65 at the above-mentioned main panel 61 are constituted by hinges of the same structure, respectively, whereby, each of the sub-panels 62-65 can be swiveled about the side independently in a range of approximately 180° with respect to the above-mentioned main panel 61, respectively, as shown in FIG. 14. Each sub-panel is arranged such that its posture may be maintained in the swiveled position, and each of the above-mentioned hinges arranged to have moderate resistance against the swivel operation.

The above-mentioned main panel 61 located in the center is attached to a lower bottom of a case 67 whose circumference sides are in the shape of a rectangle and formed to be thin (flat) in a vertical direction, and this case 67 accommodates therein a dimming control unit (not shown) which supplies drive current for dimming control to the organic EL element constituting each of the above-mentioned planar light-emitting units 61a-65a, and a remote-control light-receiving part, etc.

This dimming control unit has the same structure as that of facilities respectively installed in the rooms A-C as shown in FIG. 1, for example, Accordingly, each organic EL element which constitutes a respective one of the planar light-emitting units 61a-65a is individually subjected to the dimming control based on the dimming control signal from the main controller 2 as shown in FIG. 1, thus allowing the lighting control in various ways.

Further, as with the example as shown in FIG. 1, it is arranged that the above-mentioned remote-control light-receiving part within the above-mentioned case 67 is supplied with the operation signal from the remote control unit 11, to perform the dimming control for the sub-controller 7. In the case where it is supplied with the operation signal from the remote control unit 11, each organic EL element which constitutes a respective one of the planar light-emitting units 61a-65a operates so that this remote control operation signal is given priority so as to perform the dimming control.

In this case, it is arranged that the data of the dimming control applied to the sub-controller 7 may be sent through signal line 2a to the main controller 2, as shown in FIG. 1, by the remote control unit 11. It is desirably arranged that the dimming data inputted from the master control panel 3 into the main controller 2 may be rewritten and replaced with the dimming data as instructed by the above-mentioned remote control unit 11. By arranging in such a way, in the case where the above-mentioned lighting device is turned off and then turned on again, it may be changed into a lighting state where the last dimming control by the above-mentioned remote control unit 11 is reflected.

In addition, a support component which supports the whole light device, i.e., a hanger pipe 68 hung from a ceiling, is attached to the center of an upper surface of the above-mentioned case 67. It is arranged that a branch facility which functions similarly to the outlets 6A-6C as shown in FIG. 1 is disposed at the ceiling portion from which the hanger pipe 68 is hung, and respective lines which correspond to the power supply lines 1a and 1b and signal line 2a may be extended into the above-mentioned case 67.

It is arranged that the power supply line (not shown) is laid from the dimming control unit accommodated in the above-mentioned case 67 through each hinge part 68, so that the drive current may be supplied through this power supply line to the planar light-emitting units 62a-65a of the organic EL elements in the above-mentioned respective sub-panels 62-65. In this case, an arrangement is employed in which a hollow shaft (for example) is desirably used as a support shaft for each of the above-mentioned hinges, so that the above-mentioned current supply line is inserted into this hollow shaft.

According to the thus arranged lighting device as described above, a setting angle of each of the sub-panels 62-65 can be freely changed using the above-mentioned hinge as the connection part 66. In addition, for example, the remote control operation allows each planar light-emitting unit in the main panel and a sub-panel to be subjected to the lighting control independently.

In addition, FIG. 15 shows another preferred embodiment of the lighting device used in the present invention. In the preferred embodiment as shown in FIG. 15, the connection parts 69 of the sub-panels 62-65 with respect to the main panel 61 are constituted by ball joints so that they can pivot. According to the thus arranged ball joint as described above, a free end side of the sub-panel can be swiveled not only in an up/down direction, but also in a left/right direction and a direction of rotation.

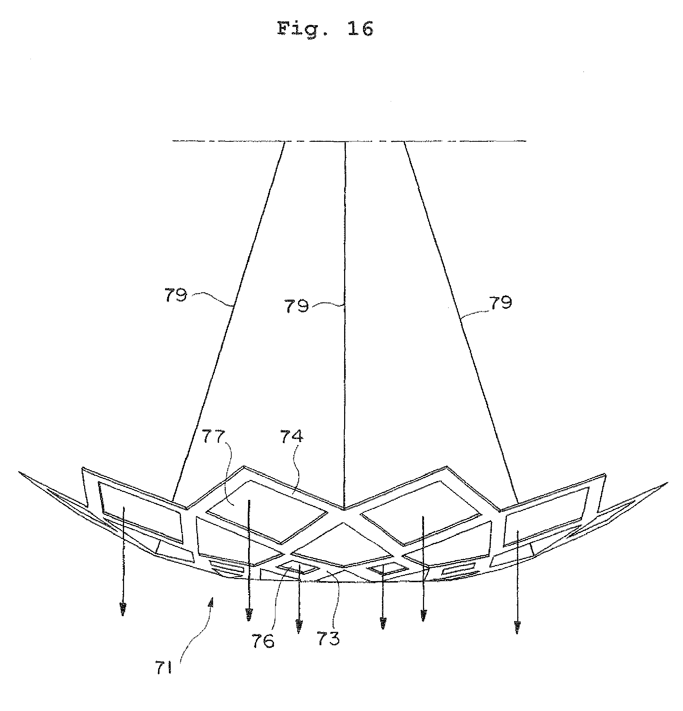

Next, FIGS. 16 - 19 show a fourth preferred embodiment of the power supply apparatus in accordance with the present invention, and illustrate an example in which a plurality of organic EL elements are used as solid light-emitting elements, and one lighting device is formed from these plural organic EL elements, to perform the dimming control of each organic EL element.

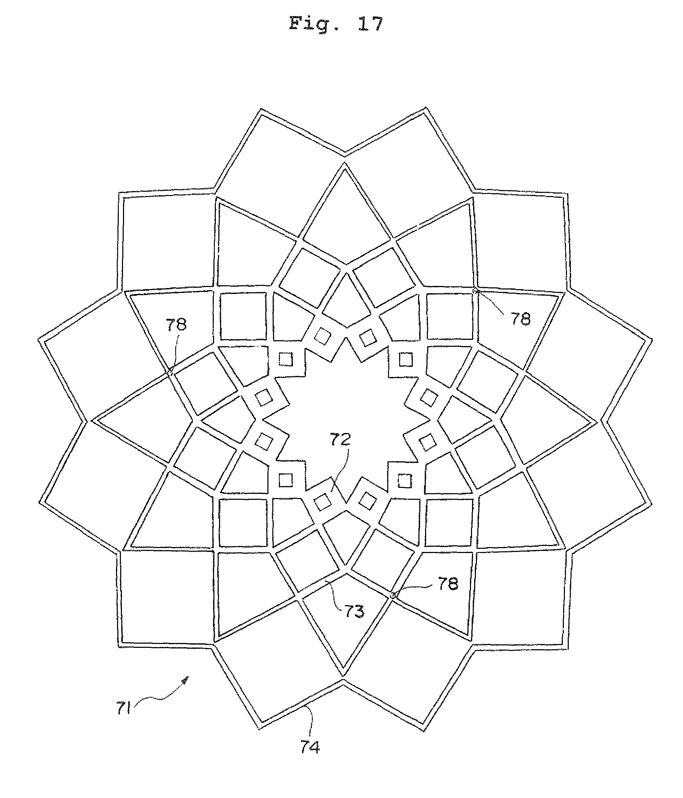

A lighting device 71 as shown in this example is of a ceiling-hung type, and hung by three wires 79 whose one end is fixed to the ceiling side (not shown) as illustrated in FIG. 16. As shown in FIG. 17 by the plan view, the light emitting units of the first to third rings are arranged by concentrically connecting them together, and reference numeral 72 shows one of the planar frames which constitute the light emitting units of the first ring which is the innermost periphery.

Further, reference numeral 73 shows one of the planar frames which constitute the light emitting units of the second ring formed outside the light emitting units of the above-mentioned first ring. Furthermore, reference numeral 74 shows one of the planar frames which constitute the light emitting units of the third ring formed further outside the light emitting units of the second above-mentioned ring.

An outer shape of each of the frames which constitute the light emitting units of the above-mentioned first to third rings is substantially square. Twelve (which is the same number) frames are each used for the light emitting units of the first to third rings. Therefore, the frame 72 constituting the light emitting unit of the first ring which is the innermost periphery is arranged to have the smallest outer shape, and the frames 73 and 74 which constitute the light emitting units of the second and third rings are arranged to have larger outer shapes in order.

Further, as for the respective frames 72 which constitute the light emitting units of the first ring, opposed corner portions are connected together annularly so that the light emitting units of the above-mentioned first ring are arranged. Furthermore, as for the respective frames 73 which constitute the light emitting units of the second ring, opposed corner portions are similarly connected annularly so that the light emitting units of the above-mentioned second ring are arranged, and these frames 73 are each connected at opposed corner portions of the frames 72 and 73 so as to circumscribe a perimeter of each of the above-mentioned frames 72 which constitute the light emitting units of the first ring.

Still further, as for the respective frames 74 which constitute the light emitting units of the third ring, opposed corner portions are similarly connected annularly so that the light emitting units of the above-mentioned third ring are arranged, and these frames 74 are each connected at opposed corner portions of the frames 73 and 74 so as to circumscribe a perimeter of each of the above-mentioned frames 73 which constitute the light emitting units of the second ring.

Further, the plane light emitters (to be set forth later) 75, 76, and 77 sides in the respective frames 72, 73, and 74 which constitute the light emitting units of the above-mentioned respective rings are arranged so as to form a dome shape. In other words, as shown in FIG. 16, in the case where the lighting device 71 is hung, a central part side of the lighting device is arranged to project gradually downwards. In addition, reference numeral 78 as shown in FIG. 17 illustrates attachment parts for three wires 79 as shown in FIG. 16.

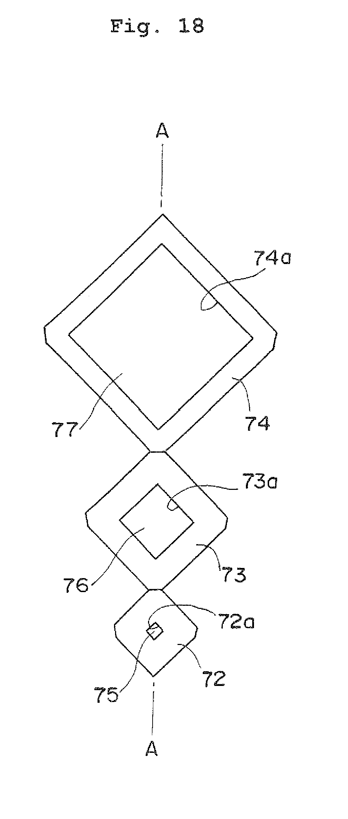

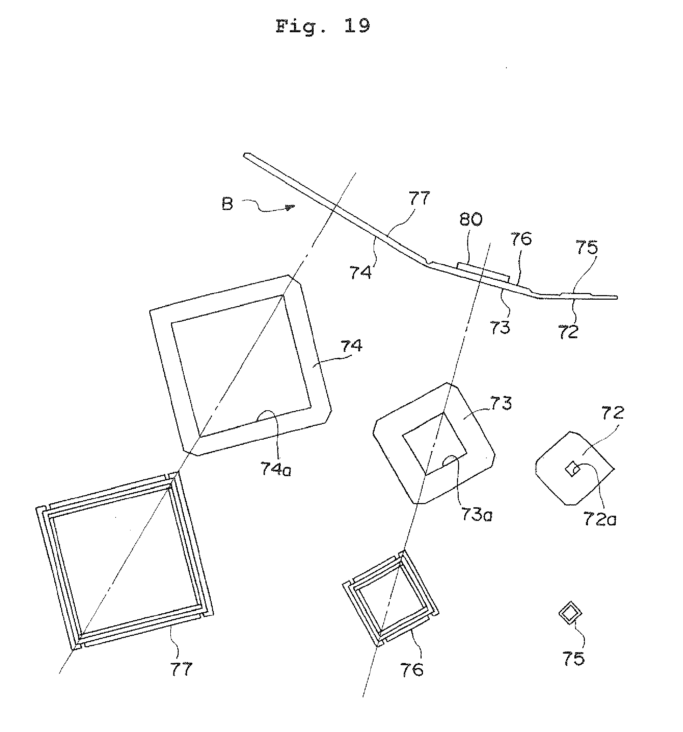

FIGS. 18 and 19 are for explaining an example in which the plane light emitters 75-77 are respectively mounted to the above-mentioned frames 72-74. As shown in FIG. 18, in this preferred embodiment, one unit is constituted by a combination of the frame 72, frame 73, and frame 74 which respectively constitute the light emitting units of the above-mentioned first - third rings. In other words, 12 units of combinations as shown in FIG. 18 are prepared and connected annularly so as to form the lighting device as shown in FIGS. 16 and 17.

As shown in FIG. 18, a stainless steel plate is used for each of the frames 72-74 which constitutes one unit, and subjected to decoration processing, such as for example hairline processing etc. Further, window holes 72a-74a which are formed substantially square are respectively formed at the frames 72-74. Light emitting sides of the organic EL elements 75-77 are provided at the backs so as to face the above-mentioned window holes 72a-74a. In this way, the luminescence sides of the above-mentioned EL elements 75-77 are provided so that they are framed at the respective window holes 72a-74a.

The above-mentioned one unit is shown as B in FIG. 19 which is a sectional view taken along line A-A of FIG. 18. As shown in FIG. 19 as B, on the basis of the frame 72 which constitutes the light emitting unit of the first ring, the frame 73 which constitutes the light emitting unit of the second ring is bent at an angle of approximately 15°, and the frame 74 which constitutes the light emitting unit of the third ring is further bent at an angle of approximately 15° in the same direction. In this way, the EL elements 75-77 sides at the respective frames 72-74 are arranged to form a dome shape, as described above.

In addition, FIG. 19 shows relationships among the respective frames 72-74 and the EL elements 75-77 which are provided at the respective backs of the frames. As described above, the number of the EL elements of different sizes 75-77 which constitute the light emitting units of the first - third rings is 36, therefore it is possible to realize various lighting operations, including a blink operation, such as lighting for each ring, lighting the light emitting units of one ring intermittently, etc.

The various lighting operations including the above-mentioned blink operation may be realized, for example, by means of the power supply apparatus as described with reference to FIG. 8. In this case, instead of the hub case 22 as shown in FIG. 8 and the above-mentioned power supply module 29 accommodated therein, a control board 80 is provided at the back of the frame 73 which forms the light emitting unit of the second ring. The control board 80 operates to carry out the dimming control of the EL elements 75-77 arranged at the respective frames 72-74 which constitute one unit.

Therefore, in this preferred embodiment, the control board 80 is arranged at the back of the frame 73 (of each unit) which forms the light emitting unit of the second ring. As with the example shown in FIG. 8, the signal line 31 is cascade-connected to each control board 80 from the main controller 35, and the power supply line 32 is similarly connected from the direct-current power source 33.

Further, in the preferred embodiment as shown in FIGS. 16 - 19, it is desirable that a light-receiving part (not shown) for a remote control signal is provided for any one of the above-mentioned control boards 80. In this case, the signal received in the above-mentioned remote-control light-receiving part is processed in the control board 80, and the EL elements 75-77 arranged at the respective frames 72-74 operate so that the remote control operation signal is given priority so as to perform the dimming control.

Also in this case, it is desirably arranged that the dimming control data received by a processing circuit in the above-mentioned control board 80 may be sent to the main controller 35 through, for example, the signal line 31 as shown in FIG. 8 by the above-mentioned remote control operation, and that the dimming data inputted into the main controller 35 from the master control panel 34 may be rewritten and replaced with the dimming data specified by the above-mentioned remote control operation. By arranging in such a way, in the case where the above-mentioned lighting device is turned off and then turned on again, it may be changed into a lighting state where the dimming control by the last remote control operation is reflected.

## Claims

1. A power supply apparatus for a lighting device, comprising:
a plurality of lighting devices whose light sources are one or more solid light-emitting elements which are supplied with current from a single direct-current power source, lit, and driven respectively, or one lighting device whose light sources are a plurality of solid light-emitting elements which are supplied with current from a single direct-current power source, lit, and driven respectively,
a single main controller for generating a control signal for controlling dimming with regard to the plurality of solid light-emitting elements in said plurality of lighting devices or one lighting device, and
a sub-controller, assuming said one or more lighting devices or one or more solid light-emitting elements in one lighting device to be a unit, being provided corresponding to a lighting device for each said unit or the solid light-emitting elements for each said unit, and controlling dimming of the lighting device for each said unit or the solid light-emitting elements for each said unit based on the control signal sent from said main controller, respectively.

2. The power supply apparatus for the lighting device as claimed in claim 1, wherein said sub-controller is individually subjected to dimming operation and arranged such that the dimming control of said lighting device or said solid light-emitting element disposed corresponding to said sub-controller may be carried out in preference to the dimming control based on the control signal from said main controller.

3. The power supply apparatus for the lighting device as claimed in claim 1 or 2, wherein a power supply line which transmits direct current supplied from said direct-current power source and a signal line which transmits the control signal from said main controller are connected together through one outlet for every sub-controller provided corresponding to the lighting device for each said unit.

4. The power supply apparatus for the lighting device as claimed in claim 3, wherein at least one said outlet is provided for each room of a building.

5. The power supply apparatus for the lighting device as claimed in claim 1 or 2, wherein said main controller is arranged such that operation of transmitting said control signal for controlling dimming to each said sub-controller may be performed according to a magnitude of outside light.

6. The power supply apparatus for the lighting device as claimed in claim 1 or 2, wherein an organic EL element or LED is used as said solid light-emitting element.
